# EUROPÄISCHE PATENTSCHRIFT

(11) **EP 3 329 571 B1**
(45) Veröffentlichungstag und Bekanntmachung des Hinweises auf die Patenterteilung: **05.05.2021**
(21) Anmeldenummer: 16724019.1
(22) Anmeldetag: 17.05.2016
(51) Int. Cl.: H02G 15/113, H01R 13/516, H01R 13/639, F16L 59/18, F16L 57/00, H01R 13/533, B60S 1/48

(54) **WINDSCHUTZHÜLLE UND EINE STECKVERBINDUNGSVORRICHTUNG MIT EINER SOLCHEN**
WIND PROTECTION COVER AND PLUG CONNECTION USING THE COVER
COUVERCLE DE PROTECTION CONTRE LE VENT ET RACCORDEMENT AVEC UN TEL COUVERCLE

(30) Priorität: 30.07.2015 DE 102015112519
(43) Veröffentlichungstag der Anmeldung: 06.06.2018
(73) Patentinhaber: NORMA Germany GmbH, 63477 Maintal (DE)
(72) Erfinder: STOLL, Viktor, 63538 Grosskrotzenburg (DE); MANN, Stephan, 63599 Biebergemünd (DE); WEBER, Benjamin, 63739 Aschaffenburg (DE); PETSCHL, Thomas, 63543 Neuberg (DE)
(74) Vertreter: Patentanwälte Olbricht Buchhold Keulertz
(86) Internationale Anmeldenummer: PCT/EP2016/060994
(87) Internationale Veröffentlichungsnummer: WO 2017/016697

(56) Entgegenhaltungen:
- WO-A1-2012/167326
- US-A- 3 183 302
- US-A- 4 643 505
- US-A- 5 755 588
- US-A1- 2015 014 490

## Beschreibung

Die Erfindung betrifft eine Windschutzhülle gemäß dem Oberbegriff von Anspruch 1 und eine Steckverbindungsvorrichtung mit einer solchen gemäß Anspruch 8.

Windschutzhüllen dienen insbesondere dem Schutz von Steckverbindungen zwischen Leitungen vor Wind und damit einhergehender Kälte. Steckverbindungen bilden eine steckbare Verbindung zwischen zwei Leiterabschnitten aus. Bei den Leiterabschnitten kann es sich um elektrische Leiter oder auch um hydraulische Leiter handeln. Oftmals werden zum Beispiel im Automobilbau auch elektrische Leiter und hydraulische Leiter in einem Leiterbaum zusammengefasst. Unter anderem sind hier die Wischwasserleitungen betroffen, die in Kabelbäume integriert sind.

Die Steckverbindungen sind besonders anfällig gegen Kälte und es kann zu einem Einfrieren des Fluids in den hydraulischen Leitungen kommen. Leitungssteckverbinder von elektrischen Leiterabschnitten weisen meist harte Materialien auf und können klappernde und klopfende Geräusche bei Vibrationen erzeugen, indem sie mit weiteren Leitungssteckverbindern oder Peripheriebauteilen kollidieren. Für eine hohe Wartungsfreundlichkeit kann jedoch nicht auf die Leitungssteckverbinder verzichtet werden.

Als Windschutzhüllen kommen im Stand der Technik, insbesondere im Fahrzeugbau, Windschutzschläuche zum Einsatz. Diese flexiblen Windschutzschläuche werden über die Leitungssteckverbinder geschoben, wozu sie meist vorher bei geöffneten Leitungssteckverbindern auf einen der zu verbindenden Leiterabschnitte aufgeschoben werden müssen. Nachteilhaft hieran ist, dass sie elektrische Kabel inklusive der Leitungssteckverbinder und auch hydraulische Leitungssteckverbinder nur schlecht positionieren können. Es besteht die Gefahr, dass hierdurch Geräusche auftreten, z.B. Klappergeräusche. Außerdem liegen Windschutzschläuche teilweise am Leitungssteckverbinder an, wodurch Kältebrücken ausgebildet werden. Fluide in hydraulischen Verbindern können hierdurch einfrieren oder zumindest sehr zähflüssig werden.

Ein weiterer Nachteil stellt die unkontrollierte Montage dar. Zuerst wird der Windschutzschlauch grob in Position gebracht und anschließend meist ein Kabelbinder um die Enden festgezogen. Das Anzugsmoment ist kaum vorherbestimmbar, sodass entweder Luftdurchlässe freibleiben oder Leiter gequetscht werden. Je nachdem wie Leiterbündel gerade fallen kann sich die Verbindung später wieder lockern und der Windschutzschlauch verrutschen. Bei der Montage / Demontage sind die Schlauchenden außerdem umzustülpen, was Handgeschick und Zeit erfordert. Im Wartungsfall ist nachteilig, dass der Windschutzschlauch zurückgeschoben werden muss, um an die einzelnen Leitungssteckverbinder heranzukommen.

Ein alternativer Schutz von zumindest einem elektrischen Verbinder offenbart US 7,307,219 B1, nach der zwei Halbschalen eingesetzt werden, die zusammengesetzt eine Hülle mit einem inneren Hohlraum ausbilden. Die Öffnungen der Halbschalen sind jeweils mit einer Elastomermembran überspannt. Legt man den elektrischen Verbinder nunmehr zwischen die Halbschalen und schließt diese, verformen sich die zwei Membranen um den elektrischen Verbinder herum. Nachteilhaft ist, dass ein relativ großer Kasten um den elektrischen Verbinder notwendig ist, um dies zu realisieren. Legt man mehrere Leitungssteckverbinder zwischen die Membranen können diese wiederum miteinander kollidieren und sind nicht ordentlich zueinander positionierbar. Des Weiteren stellen die Membranen Wärmebrücken dar, welche von der Gehäusehülle unmittelbar zum elektrischen Verbinder führen. Für mehrere Leitungssteckverbinder oder hydraulische Verbinder ist die Hülle nach US 7,307,219 B1 daher eher ungeeignet.

Weiterhin ist aus GB 1 413 650 A eine Hülle bestehend aus zwei Halbschalen bekannt. Die zwei Halbschalen folgen exakt der Geometrie der aufzunehmenden elektrischen Leiter und Verbinder. Die Halbschalen werden um diese gelegt und dann an einem Flanschrand durch Schrauben miteinander verbunden. Nachteilhaft ist, dass eine große Wärmebrücke vorhanden ist, sodass sich diese Ausbildung bei niedrigen Temperaturen nicht für hydraulische Leitungssteckverbinder eignet Das Dokument WO 2012/167326 A1 offenbart eine wasserdichte Hülle für eine elektrische Steckverbindung.

Aufgabe ist es daher, eine Vorrichtung bereitzustellen, welche geeignet ist, Geräuschentwicklungen im Bereich von Leitungssteckverbindern zu verhindern und hydraulische Leitungssteckverbinder vor niedrigen Temperaturen zu schützen. Außerdem soll sie kompakt, einfach und korrekt montierbar, wartungsfreundlich sowie kostengünstig sein.

Hauptmerkmale der Erfindung sind in Anspruch 1 angegeben. Ausgestaltungen sind Gegenstand der Ansprüche 2 bis 10.

Die Erfindung betrifft eine Steckverbindungsvorrichtung mit einer Windschutzhülle, wobei die Windschutzhülle eine Kunststoffschale aufweist, die eine erste Teilschale und eine zweite Teilschale aufweist, wobei die erste Teilschale und die zweite Teilschale einen Aufnahmeraum umschließen und eine erste und zweite Leitungsöffnung ausbilden, die den Aufnahmeraum mit dem Umgebungsbereich außerhalb des Aufnahmeraums verbinden. Außerdem verfügt die Kunststoffschale über ein Haltemittel mit einer Aufnahmegeometrie für wenigstens einen Leitungssteckverbinder, das an der ersten Teilschale angeordnet und so ausgebildet ist, dass ein mit der Aufnahmegeometrie aufgenommener Leitungssteckverbinder im Aufnahmeraum durch einen Luftspalt von der ersten Teilschale und der zweiten Teilschale beabstandet gehalten ist Dieser Erfindungsgegenstand ist dazu geeignet, eine geräuschvermeidende und isolierende Aufnahme eines Leitungssteckverbinders bereitzustellen, wobei die Steckverbindungsvorrichtung kostengünstig und einfach handhabbar ist.

Vorteilhaft an einer derartigen Ausgestaltung ist, die Ersetzbarkeit von Windschutzschläuchen. Es wird eine Vormontage auf einer Seite bzw. in einer Teilschale möglich, was einfach handhabbar ist. Es wird eine dauerhafte und exakte Positionierung des Leitungssteckverbinders in der Windschutzhülle erzielt. Durch den Abstand wird ein Luftpolster um die Steckverbinder-Kontur gebildet, die thermisch isoliert. Außerdem werden Klappergeräusche verhindert, denn der Leitungssteckverbinder befindet sich in einer definierten Position der Aufnahmegeometrie und kann nicht mit anderen Bauteilen kollidieren.

In einer bevorzugten kostengünstigen Ausgestaltung ist das Haltemittel einstückig, insbesondere monolithisch, mit der ersten Teilschale ausgebildet. Eine einfache und schnelle Montage gelingt insbesondere, nach einer optionalen Ausgestaltung, bei der die erste und zweite Leitungsöffnung in der Trennebene zwischen der ersten und zweiten Teilschale angeordnet sind.

Im Übrigen sollten die erste und zweite Teilschale der Außenkontur des oder der Leitungssteckverbinder folgen. Idealer Weise ergibt sich eine Windschutzhülle, die zwei schlanke Enden mit den Leiteröffnungen sowie eine dazwischenliegende Verdickung in zumindest einer Raumrichtung aufweist. Vorzugsweise liegt die maximale Verdickung in der Ebene der der Trennebene. Dies erleichtert die Montage durch Einlegen des oder der Leitungssteckverbinder.

Gemäß einer näheren Ausführungsform der Windschutzhülle sind die erste und zweite Teilschale über ein Drehgelenk miteinander gekoppelt, sodass die erste und zweite Teilschale relativ zueinander aufklappbar und zuklappbar sind. Dies ermöglicht eine einfache sowie ergonomische Handhabung. Eine kostengünstige Variante wird erreicht, wenn das Drehgelenk ein Folienscharnier ist.

Gemäß einer speziellen Ausführungsart der Windschutzhülle ist das Haltemittel von einer Rippe ausgebildet. Die Rippe versteift zugleich die Teilschalen und verhindert deren Verformung. Die Rippe verläuft bevorzugt quer zur Ausrichtung des Leitungssteckverbinders. Die Rippen können dann Zugkräfte auf den Leitungssteckverbinder in die Kunststoffhülle einleiten.

Ferner kann die Windschutzhülle optional betätigbare Rastmittel aufweisen, mit denen die erste und zweite Teilschale miteinander verschließbar sind, um den Aufnahmeraum auszubilden. Es wird hierdurch eine werkzeuglose Montage ermöglicht. Je nach Auslegung ist eine werkzeuggebundene oder werkzeuglose Demontage realisierbar. Bevorzugt umfassen die Rastmittel erste Rastmittel an der ersten Teilschale und zweite Rastmittel an der zweiten Teilschale. Preiswert in der Herstellung ist es insbesondere, wenn die ersten Rastmittel einstückig, insbesondere monolithisch, mit der ersten Teilschale ausgebildet sind, und die zweiten Rastmittel einstückig, insbesondere monolithisch, mit der zweiten Teilschale ausgebildet sind.

Eine Ergänzung der Windschutzhülle kann darin bestehen, dass die Aufnahmegeometrie ein erstes Steckmittel aufweist. Ein Aufstecken des Leitungssteckverbinders führt zu einer klaren Positionierung und ist aus einer einzigen Richtung einfach durchführbar. Bevorzugt werden die Montage erleichternde Einführschrägen am ersten Steckmittel oder dem Gegenstück vorgesehen.

In einer Variante der Windschutzhülle ist eine Dichtung zwischen der ersten Teilschale und der zweiten Teilschale ausgebildet und/oder angeordnet. Dies gelingt durch mechanisch aneinander anliegende Dichtflächen oder durch eine elastische Dichtung. Damit dringt kein Wind in die Windschutzhülle ein. Auch im Bereich der Leitungsöffnungen können Dichtungen vorgesehen sein, insbesondere elastische Dichtmuffen.

Des Weiteren sieht eine nähere Ausgestaltung der Windschutzhülle vor, dass ein Niederhalter an der zweiten Teilschale angeordnet und so ausgebildet ist, dass ein mit der Aufnahmegeometrie aufgenommener Leitungssteckverbinder bei durch die erste und zweite Teilschale geschlossenem Aufnahmeraum in der Aufnahmegeometrie gehalten wird. Mit dem Verschließen der Kunststoffschale wird hierdurch der Leitungssteckverbinder sicher in Position gehalten, nachdem er zuvor in der ersten Teilschale schnell durch Einlegen vormontiert werden konnte. Kostengünstig ist es, wenn der Niederhalter einstückig, insbesondere monolithisch, mit der zweiten Teilschale ausgebildet ist. Eine hohe Steifigkeit der Windschutzhülle wird erreicht, wenn der Niederhalter von einer Rippe ausgebildet ist.

Eine spezielle Ausführungsform für kalte Einsatzgebiete ist dadurch ergänzt, dass ein elektrisch betriebenes Heizelement in dem Aufnahmeraum angeordnet ist. Diese ist vorzugsweise als Frostschutzheizung in Relation zum im Leitungssteckverbinder vorliegenden Fluid betrieben. Um die Windschutzhülle korrekt und dauerhaft an einem Bestimmten Ort festlegen zu können, bietet es sich an, diese derart zu ergänzen, dass die Kunststoffschale ein Befestigungsmittel zur Festlegung an einem anderen Bauteil aufweist. Dieses Befestigungsmittel kann beispielsweise eine Clipskontur, ein Rastmittel oder eine Lasche mit einer Öffnung sein.

In einer näheren Ausgestaltung der Steckverbindungsvorrichtung weist die Aufnahmegeometrie ein erstes Steckmittel und der Leitungssteckverbinder ein zweites Steckmittel auf, wobei das erste und zweite Steckmittel eine mechanische Steckverbindung ausbilden. Ein Aufstecken des Leitungssteckverbinders ist schnell durchführbar und es wird eine klare Positionierung erzielt.

In einer nähren Ausführungsform bildet der Leitungssteckverbinder eine Steckverbindung zwischen einem ersten und einem zweiten Leiterabschnitt aus, wobei der erste Leiterabschnitt durch die erste Leitungsöffnung und der zweite Leiterabschnitt durch die zweite Leitungsöffnung aus dem Aufnahmeraum heraus in den Umgebungsbereich geführt sind. Besonders geeignet ist die Steckverbindungsvorrichtung, wenn der erste und der zweite Leiterabschnitt elektrische Leiterabschnitte und/oder hydraulische Leiterabschnitte sind.

Nach der Erfindung verbindet der Leitungssteckverbinder zwei hydraulische Leiterabschnitte miteinander, und ein zweiter Leitungssteckverbinder ist insbesondere um einen Luftspalt beabstandet zum ersten Leitungssteckverbinder im Aufnahmeraum angeordnet. Damit sind nicht nur mehrere Leitungssteckverbinder platzsparend in derselben Windschutzhülle untergebracht, sondern der hydraulische Leitungssteckverbinder auch thermisch von dem zweiten Leitungssteckverbinder durch ein Luftpolster thermisch isoliert.

In einer bevorzugten Ausführungsform der Steckverbindungsvorrichtung ist der Luftspalt um den Leitungssteckverbinder im Wesentlichen gleichmäßig groß. Damit ist die thermische Isolierung in allen Richtungen homogen ausgebildet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Steckverbindungsvorrichtung mit geöffneter Kunststoffschale einer Windschutzhülle;
- Fig. 2: eine perspektivische Ansicht der in Fig. 1 gezeigten Windschutzhülle;
- Fig. 3: die in Fig. 1 gezeigte Kunststoffschale in geschlossener Stellung.

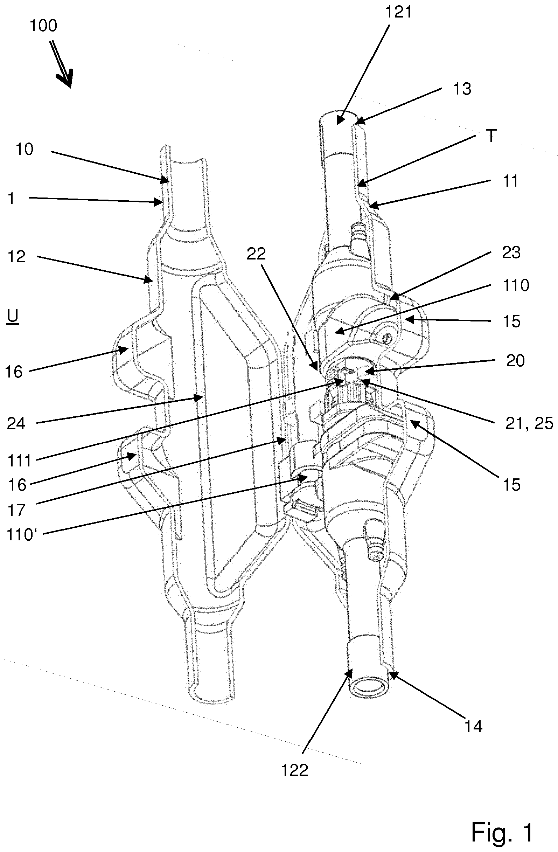

In **Fig. 1** erkennt man in einer perspektivischen Ansicht eine Steckverbindungsvorrichtung 100 mit geöffneter Kunststoffschale 10 einer Windschutzhülle 1.

Die Kunststoffschale besteht aus einer ersten Teilschale 11 und einer zweiten Teilschale 12, die - sobald sie geschlossen sind - einen Aufnahmeraum 22 umschließen. Außerdem bilden die beiden Teilschalen 11, 12 in der Trennebene T eine erste und zweite Leitungsöffnung 13, 14 aus, die insbesondere an gegenüberliegenden Enden der länglichen Kunststoffschale 10 positioniert sind. Die erste und zweite Leitungsöffnung 13, 14 verbinden den Aufnahmeraum 22 mit dem Umgebungsbereich U außerhalb des Aufnahmeraums 22.

Weiterhin sind die erste und zweite Teilschale 11, 12 über ein Drehgelenk 17, insbesondre ein Folienscharnier, miteinander gekoppelt, sodass die erste und zweite Teilschale 11, 12 relativ zueinander aufklappbar und zuklappbar sind. Um die Teilschalen 11, 12 in der zugeklappten Stellung zu halten, sind betätigbare Rastmittel 15, 16 vorgesehen, mit denen die erste und zweite Teilschale 11, 12 miteinander verschließbar sind. Dabei sind erste Rastmittel 15 an der ersten Teilschale 11 und zweite Rastmittel 16 an der zweiten Teilschale 12 ausgebildet, dies insbesondere einstückig monolithisch mit der jeweiligen der Teilschalen 11, 12.

Im inneren der Kunststoffhülle 10 sieht man ein Haltemittel 20 mit einer Aufnahmegeometrie 21 für einen ebenfalls dargestellten Leitungssteckverbinder 110. Das Haltemittel 20 ist an der ersten Teilschale 11 angeordnet und so ausgebildet, dass der mit der Aufnahmegeometrie 21 aufgenommene Leitungssteckverbinder 110 im Aufnahmeraum 22 durch einen Luftspalt 23 von der ersten Teilschale 11 und in geschlossener Stellung auch von der zweiten Teilschale 12 beabstandet gehalten ist. Das Haltemittel 20 ist einstückig, insbesondere monolithisch, mit der ersten Teilschale 11 ausgebildet. Im Besonderen handelt es sich um eine Rippe mit Ausnehmungen. Die Rippe bildet mit den Ausnehmungen eine Aufnahmegeometrie 21 aus, wobei vor allem die Ausnehmungen ein erstes Steckmittel 25 ausbilden.

Der Leitungssteckverbinder 110 weist ein korrespondierendes zweites Steckmittel 111 auf, mit dem er mit dem ersten Steckmittel 25 zusammengesteckt ist, wodurch eine mechanische Steckverbindung vorliegt.
Zu sehen ist außerdem, dass der Leitungssteckverbinder 110 eine Steckverbindung zwischen einem ersten und einem zweiten Leiterabschnitt 121, 122 ausbildet. Der erste Leiterabschnitt 121 ist durch die erste Leitungsöffnung 13 und der zweite Leiterabschnitt 122 durch die zweite Leitungsöffnung 14 aus dem Aufnahmeraum 22 heraus in den Umgebungsbereich U geführt.

Auf Seiten der zweiten Teilschale 12 ist ein Niederhalter 24 angeordnet, welcher einstückig monolithisch mit der zweiten Teilschale 12 ausgebildet ist. Insbesondere handelt es sich auch bei dem Niederhalter 24 um eine Rippe mit Ausnehmungen. Wird die zweite Teilschale 12 zugeklappt bis der Aufnahmeraum 22 geschlossen ist, hält der Niederhalter 24 den Leitungssteckverbinder 110 in der Aufnahmegeometrie 21.

Bei den ersten und den zweiten Leiterabschnitten 121, 122 handelt es sich um elektrische Leiterabschnitte und hydraulische Leiterabschnitte. Der Leitungssteckverbinder 110 verbindet insbesondere die hydraulischen Leiterabschnitte 121, 122. Die elektrischen Leiterabschnitten 121, 122 sind über einen zweiten Leitungssteckverbinder 110' miteinander verbunden, der im Wesentlichen parallel zum ersten Leitungssteckverbinder 110 ausgerichtet ist. Auch der zweite Leitungssteckverbinder 110' wird mit dem Haltemittel 20 und dem Niederhalter 24 in der Kunststoffschale 10 gehalten. Dabei ist der zweite Leitungssteckverbinder 110' um einen Luftspalt beabstandet zum ersten Leitungssteckverbinder 110 im Aufnahmeraum angeordnet.

Die Außenkontur der Kunststoffschale 10 folgt im Wesentlichen den im Inneren aufgenommenen Bauteilen, sodass der Luftspalt 23 um den Leitungssteckverbinder 110 und den zweiten Leitungssteckverbinder 110' im Wesentlichen gleichmäßig groß ist.

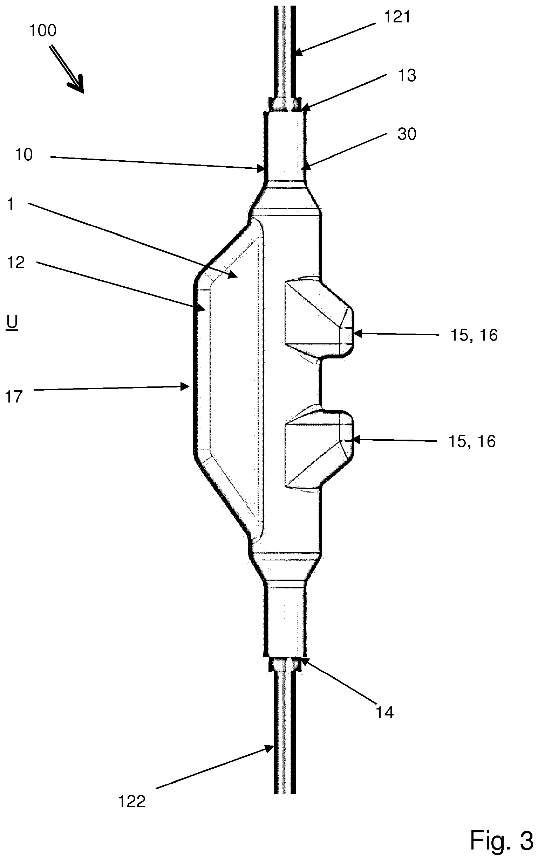

Gemäß **Fig. 3** ist die zweite Teilschale 12 um das Drehgelenk 17 gedreht worden, sodass die erste und die zweite Teilschale 11, 12 zueinander geschlossen sind. Mit Ausnahme der Leitungsöffnungen 13, 14 liegen die erste und die zweite Teilschale 11, 12 in der Trennebene T aneinander an. Hierdurch wird eine Dichtung 30 zwischen der ersten Teilschale 11 und der zweiten Teilschale 12 ausgebildet. In dieser Geschlossenstellung stehen die Rastmittel 15, 16 miteinander in Eingriff und halten die Kunststoffschale 10 geschlossen sowie die Leitungssteckverbinder 110, 110' in Position.

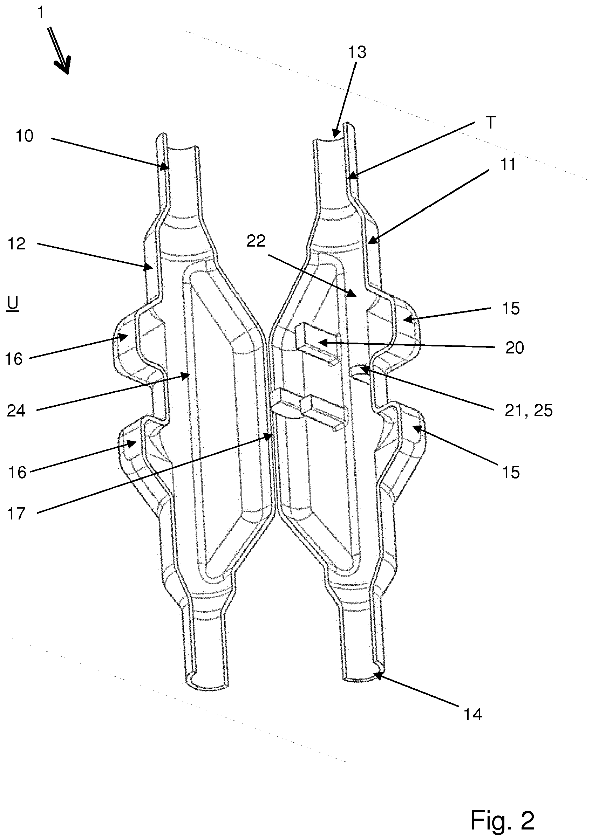

In Fig. 2 ist die Windschutzhülle 1 nach Fig. 1 noch einmal alleine dargestellt. Die Ausführungen zu Fig. 1, welche die Windschutzhülle 1 betreffen, gelten entsprechend auch für Fig. 2.

Die Erfindung ist nicht auf eine der vorbeschriebenen Ausführungsformen beschränkt, sondern in vielfältiger Weise abwandelbar.

So kann beispielsweise optional ein elektrisch betriebenes Heizelement in dem Aufnahmeraum 22 angeordnet sein. Auch kann die Kunststoffschale 10 mit einem Befestigungsmittel zur Festlegung an einem anderen Bauteil ausgestattet sein.

**Bezugszeichenliste**

| | | | |
|---|---|---|---|
| 1 | Windschutzhülle | 25 | erstes Steckmittel |
| | | | |
| 10 | Kunststoffschale | 30 | Dichtung |
| 11 | erste Teilschale | | |
| 12 | zweite Teilschale | 100 | Steckverbindungsvorrichtung |
| 13 | erste Leitungsöffnung | | |
| 14 | zweite Leitungsöffnung | 110 | Leitungssteckverbinder |
| 15 | erstes Rastmittel | 110' | zweiter Leitungssteckverbinder |
| 16 | zweites Rastmittel | 111 | zweites Steckmittel |
| 17 | Drehgelenk | | |
| | | 121 | erster Leiterabschnitt |
| 20 | Haltemittel | 122 | zweiter Leiterabschnitt |
| 21 | Aufnahmegeometrie | | |
| 22 | Aufnahmeraum | T | Trennebene |
| 23 | Luftspalt | U | Umgebungsbereich |
| 24 | Niederhalter | | |

## Patentansprüche

1. **Steckverbindungsvorrichtung** (100) mit einem Leitungssteckverbinder (110), der eine Steckverbindung zwischen einem ersten und einem zweiten Leiterabschnitt (121, 122) ausbildet, wobei der erste und der zweite Leiterabschnitt (121, 122) hydraulische Leiterabschnitte sind, mit einer Windschutzhülle (1) mit einer Kunststoffschale (10),
- die eine erste Teilschale (11) und eine zweite Teilschale (12) aufweist,
- wobei die erste Teilschale (11) und die zweite Teilschale (12) einen Aufnahmeraum (22) umschließen und
- eine erste und zweite Leitungsöffnung (13, 14) ausbilden, die den Aufnahmeraum (22) mit dem Umgebungsbereich (U) außerhalb des Aufnahmeraums (22) verbinden,
- wobei der erste Leiterabschnitt (121) durch die erste Leitungsöffnung (13) und der zweite Leiterabschnitt (122) durch die zweite Leitungsöffnung (14) aus dem Aufnahmeraum (22) heraus in den Umgebungsbereich (U) geführt sind,
- und mit einem Haltemittel (20) mit einer Aufnahmegeometrie (21) für den Leitungssteckverbinder (110),
- das an der ersten Teilschale (11) angeordnet und
- so ausgebildet ist, dass der mit der Aufnahmegeometrie (21) aufgenommene Leitungssteckverbinder (110) im Aufnahmeraum (22) durch einen Luftspalt (23) von der ersten Teilschale (11) und der zweiten Teilschale (12) beabstandet gehalten ist,
- wobei der Leitungssteckverbinder (110) in der Aufnahmegeometrie (21) aufgenommen ist.

2. Steckverbindungsvorrichtung (100) nach Anspruch 1, **dadurch gekennzeichnet, dass** die erste und zweite Teilschale (11, 12) über ein Drehgelenk (17) miteinander gekoppelt sind, sodass die erste und zweite Teilschale (11, 12) relativ zueinander aufklappbar und zuklappbar sind.

3. Steckverbindungsvorrichtung (100) nach einem der vorhergehenden Ansprüche, **dadurch gekennzeichnet, dass** das Haltemittel (20) von einer Rippe ausgebildet ist.

4. Steckverbindungsvorrichtung (100) nach einem der vorhergehenden Ansprüche, **dadurch gekennzeichnet, dass** die Aufnahmegeometrie (21) ein erstes Steckmittel (25) aufweist.

5. Steckverbindungsvorrichtung (100) nach einem der vorhergehenden Ansprüche, **dadurch gekennzeichnet, dass** ein Niederhalter (24) an der zweiten Teilschale (12) angeordnet und so ausgebildet ist, dass ein mit der Aufnahmegeometrie (21) aufgenommener Leitungssteckverbinder (110) bei durch die erste und zweite Teilschale (11, 12) geschlossenem Aufnahmeraum (22) in der Aufnahmegeometrie (21) gehalten wird.

6. Steckverbindungsvorrichtung (100) nach einem der vorhergehenden Ansprüche, **dadurch gekennzeichnet, dass** ein elektrisch betriebenes Heizelement in dem Aufnahmeraum (22) angeordnet ist.

7. Steckverbindungsvorrichtung (100) nach einem der vorhergehenden Ansprüche, **dadurch gekennzeichnet, dass** die Kunststoffschale (10) ein Befestigungsmittel zur Festlegung an einem anderen Bauteil aufweist.

8. Steckverbindungsvorrichtung (100) nach einem der vorhergehenden Ansprüche, **dadurch gekennzeichnet, dass** die Aufnahmegeometrie (21) ein erstes Steckmittel (25) und der Leitungssteckverbinder (110) ein zweites Steckmittel (111) aufweist, wobei das erste und zweite Steckmittel (25, 111) eine mechanische Steckverbindung ausbilden.

9. Steckverbindungsvorrichtung (100) nach einem der vorhergehenden Ansprüche, **dadurch gekennzeichnet, dass** der Leitungssteckverbinder (110) zwei hydraulische Leiterabschnitte miteinander verbindet, und ein zweiter Leitungssteckverbinder (110') beabstandet zum ersten Leitungssteckverbinder (110) im Aufnahmeraum angeordnet ist.

10. Steckverbindungsvorrichtung (100) nach einem der vorhergehenden Ansprüche, **dadurch gekennzeichnet, dass** der Luftspalt (23) um den Leitungssteckverbinder (110) im Wesentlichen gleichmäßig groß ist.

## Claims

1. Plug-connector device (100) with a line plug connector (110) that forms a plug connection between a first and a second conductor portion (121, 122), wherein the first and second conductor portions (121, 122) are hydraulic conductor portions, with a wind-protection casing (1) comprising a plastic shell (10),
- which has a first part-shell (11) and a second part-shell (12),
the first part-shell (11) and the second part-shell (12) enclosing a receiving space (22) and
- forming a first and a second line opening (13, 14), which connect the receiving space (22) to the surrounding region (U) outside the receiving space (22),
- wherein the first conductor portion (121) being led through the first line opening (13) and the second conductor portion (122) being led through the second line opening (14) out of the receiving space (22) into the surrounding region (U),
- and with a holding means (20) with a receiving geometry (21) for a line plug connector (110),
- which is arranged on the first part-shell (11) and
- is formed in such a way that a line plug connector (110) received by the receiving geometry (21) is held in the receiving space (22) at a distance from the first part-shell (11) and the second part-shell (12) by an air gap (23)
- wherein the line plug connector (110) is received in the receiving geometry (21).

2. Plug-connector device (100) as claimed in claim 1, **characterized in that** the first and second part-shells (11, 12) are coupled to one another by way of a rotary joint (17), so that the first and second part-shells (11, 12) can be swung open and swung shut in relation to one another.

3. Plug-connector device (100) as claimed in one of the preceding claims, **characterized in that** the holding means (20) is formed by a rib.

4. Plug-connector device (100) as claimed in one of the preceding claims, **characterized in that** the receiving geometry (21) has a first plugging means (25).

5. Plug-connector device (100) as claimed in one of the preceding claims, **characterized in that** a holddown device (24) is arranged on the second part-shell (12) and is formed in such a way that a line plug connector (110) received by the receiving geometry (21) is held in the receiving geometry (21) when the receiving space (22) is closed by the first and second part-shells (11, 12).

6. Plug-connector device (100) as claimed in one of the preceding claims, **characterized in that** an electrically operated heating element is arranged in the receiving space (22).

7. Plug-connector device (100) as claimed in one of the preceding claims, **characterized in that** the plastic shell (10) has a fastening means for fixing on another component.

8. Plug-connector device (100) as claimed in one of the preceding claims, **characterized in that** the receiving geometry (21) has a first plugging means (25) and the line plug connector (110) has a second plugging means (111), the first and second plugging means (25, 111) forming a mechanical plug connection.

9. The plug-connector device (100) as claimed in one of the preceding claims, **characterized in that** the line plug connector (110) connects two hydraulic conductor portions to one another, and a second line plug connector (110') is arranged in the receiving space at a distance from the first line plug connector (110).

10. The plug-connector device (100) as claimed in one of the preceding claims, **characterized in that** the air gap (23) around the line plug connector (110) is of a substantially uniform size.

## Revendications

1. Dispositif de connexion enfichable (100) comprenant un connecteur à fiche de conducteur (110) qui forme une connexion enfichable entre une première et une deuxième section de conducteur (121, 122), dans lequel la première et la deuxième section de conducteur (121, 122) sont des sections de conducteur hydraulique, avec une enveloppe de protection contre le vent (1) ayant une enveloppe en plastique (10)
- qui présente une première enveloppe partielle (11) et une seconde enveloppe partielle (12),
- la première enveloppe partielle (11) et la seconde enveloppe partielle (12) entourant un espace de réception (22) et
- formant des première et seconde ouvertures conductrices (13, 14) qui relient l'espace de réception (22) à la zone environnante (U) à l'extérieur de l'espace de réception (22),
- dans lequel la première section de conducteur (121) est guidée hors de l'espace de réception (22) dans l'espace environnant (U) par la première ouverture de conducteur (13) et la deuxième section de conducteur (122) est guidée hors de l'espace de réception (22) dans l'espace environnant (U) par la deuxième ouverture de conducteur (14),
- et avec un moyen de retenue (20) avec une géométrie de réception (21) pour le connecteur à fiche de conducteur (110)
- qui est disposé sur la première enveloppe partielle (11) et
- est conçu de telle sorte que le connecteur à fiche de conducteur (110) logé avec la géométrie de réception (21) est maintenu dans l'espace de réception (22) à distance de la première enveloppe partielle (11) et de la deuxième enveloppe partielle (12) au moyen d'un entrefer (23),
- le connecteur à fiche de conducteur (110) étant logé dans la géométrie de réception (21).

2. Dispositif de connexion enfichable (100) selon la revendication 1, **caractérisé en ce que** la première et la deuxième enveloppe partielle (11, 12) sont couplées l'une à l'autre par l'intermédiaire d'une articulation tournante (17), de sorte que la première et la deuxième enveloppe partielle (11, 12) peuvent être ouvertes et fermées l'une par rapport à l'autre.

3. Dispositif de connexion enfichable (100) selon l'une des revendications précédentes, **caractérisé en ce que** le moyen de retenue (20) est formé par une nervure.

4. Dispositif de connexion enfichable (100) selon l'une quelconque des revendications précédentes, **caractérisé en ce que** la géométrie de réception (21) comprend un premier moyen d'enfichage (25).

5. Dispositif de connexion enfichable (100) selon l'une des revendications précédentes, **caractérisé en ce qu'**un moyen de retenue (24) est disposé sur la deuxième enveloppe partielle (12) et est conçu de telle sorte qu'un connecteur à fiche de conducteur (110) logé avec la géométrie de réception (21) est maintenu dans la géométrie de réception (21) lorsque l'espace de réception (22) est fermé par la première et la deuxième enveloppe partielle (11, 12).

6. Dispositif de connexion enfichable (100) selon l'une des revendications précédentes, **caractérisé en ce qu'**un élément chauffant à commande électrique est disposé dans l'espace de réception (22).

7. Dispositif de connexion enfichable (100) selon l'une des revendications précédentes, **caractérisé en ce que** la enveloppe en plastique (10) comprend des moyens de fixation pour la fixation à un autre composant.

8. Dispositif de connexion enfichable (100) selon l'une des revendications précédentes, **caractérisé en ce que** la géométrie de réception (21) comprend un premier moyen d'enfichage (25) et le connecteur à fiche de conducteur (110) comprend un deuxième moyen d'enfichage (111), les premier et deuxième moyens d'enfichage (25, 111) formant une connexion enfichable mécanique.

9. Dispositif de connexion enfichable (100) selon l'une des revendications précédentes, **caractérisé en ce que** le connecteur à fiche de conducteur (110) relie entre eux deux sections de conducteurs hydrauliques, et un deuxième connecteur à fiche de conducteur (110') est disposé à distance du premier connecteur à fiche de conducteur (110) dans l'espace de réception.

10. Dispositif de connexion (100) selon l'une des revendications précédentes, **caractérisé en ce que** l'entrefer (23) autour du connecteur à fiche de conducteur (110) est de taille sensiblement uniforme.
